**Europäisches Patentamt**

**European Patent Office**

**Office européen des brevets**

(19)

(11) Publication number: **0 102 215**
A1

(12) # EUROPEAN PATENT APPLICATION

(21) Application number: **83304682.4**

(22) Date of filing: **12.08.83**

(51) Int. Cl.³: **F 17 D 1/20**
**F 17 D 3/03, F 16 L 55/00**

(30) Priority: **18.08.82 US 409333**

(43) Date of publication of application:
**07.03.84 Bulletin 84/10**

(84) Designated Contracting States:
**DE FR GB IT NL**

(71) Applicant: **GROVE VALVE AND REGULATOR
COMPANY**
**6529 Hollis Street**
**Oakland California 94608(US)**

(72) Inventor: **Connolly, Walter L**
**133 Danefield Place**
**Morage California 94556(US)**

(74) Representative: **Williams, Trevor John et al,**
**J.A. KEMP & CO. 14 South Square Gray's Inn**
**London WC1R 5EU(GB)**

(54) **System for quick interruption of flow in a liquid pipeline.**

(57) A system for quick interruption of flow in a liquid pipeline (12) comprising a conventional valve (14) with means for effecting a quick closure thereof. A by-pass line (48) around the valve (14) has a pressure responsive valve (50) which opens when and as long as pressure therein exceeds a set jacket pressure. The jacket pressure is set at a predetermined maximum safe pressure level and the main valve (14) operated quickly to close off the liquid pipeline (12) at a rate which produces potentially dangerous surge waves. The surge waves are relieved through the by-pass line (48) allowing a small amount of limited flow downstream to ensure the fastest possible safe operation.

EP 0 102 215 A1

./...

0102215

0102215

## SYSTEM FOR QUICK INTERRUPTION OF FLOW IN A LIQUID PIPELINE

## BACKGROUND OF THE INVENTION

There are many situations wherein it is highly desirable to close pipeline valves at a very rapid rate. For example, when there is a change in the type of liquid being transported through the pipeline, it is necessary to shut the valve rapidly between batches in order to minimize mixing of products. Also, where emergency shutdown valves are provided to protect hoses, as when loading ship tanks, they should be shut down in the event of hose rupture as quickly as possible to minimize discharge into the ocean. However, when a valve is closed rapidly, the sudden decrease in liquid flow velocity generates a corresponding pressure surge on the upstream side of the valve which could reach dangerous proportions. Generally, as a valve is being closed to decrease flow capacity thereof, there is a compensating increase in pressure differential across it, so that rate of flow through the valve does not decrease appreciably through most of the closing movement. It is just during the last increment of valve movement that there is a sharp decrease in liquid flow. Accordingly, there have been proposed valve actuators which will move the valve closure member at a very rapid rate through most of its movement toward closed position and then decelerate movement so it moves relatively slowly through the last increment of movement. However, such precise control has been very difficult to achieve particularly with the momentum generated in large pipeline valves of 36 inches in diameter and larger. Moreover, with varying fluid velocities and pipeline characteristics, it is extremely difficult to determine when to shift from fast to slow movement in order to gain the maximum benefits of fast operation without generating dangerous surges.

## OBJECTS OF THE INVENTION

It is an object of this invention to provide a system for quick interruption of flow in the liquid pipeline which avoids the generation of dangerous surge waves.

It is a further object of this invention to provide a system for interrupting flow in a liquid pipeline in the shortest possible time without generating dangerous pressure surges.

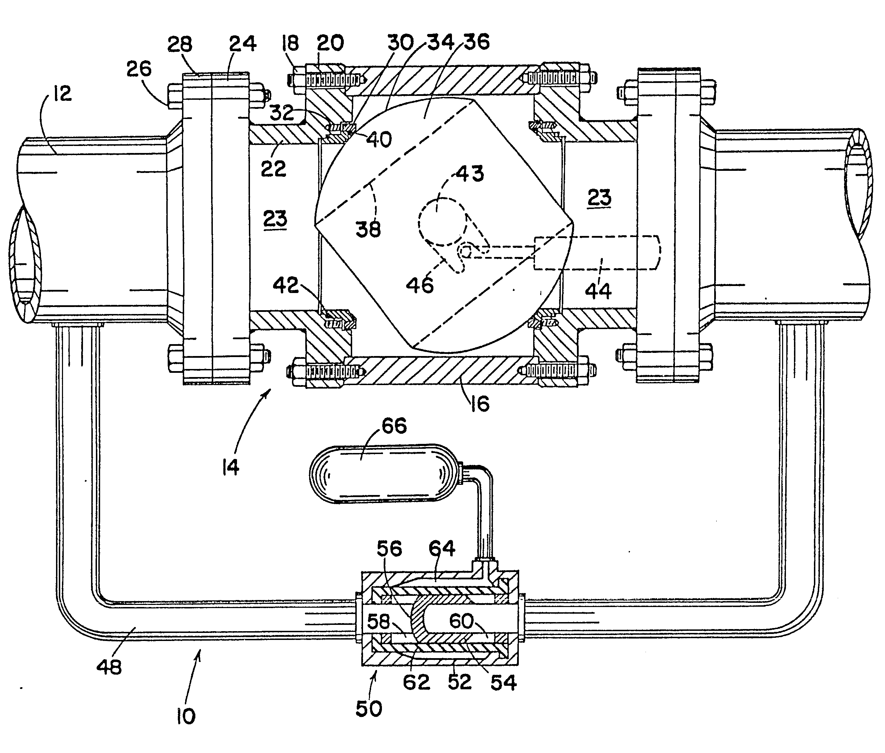

Other objects and advantages of this invention will become apparent from the description to follow, particularly when in read in conjunction with the accompanying drawing.

## SUMMARY OF THE INVENTION

In carrying out this invention, there is provided a conventional pipeline valve having the capability of moving from open to closed position at a rapid rate. This may take the form of a ball valve, gate valve, check valve or the like. A smaller by-pass line is provided around the valve to open from the upstream side to the downstream side thereof, and connected in the valve is a surge relief valve of the expansible tube type, which opens to flow when pipeline pressure exceeds a predetermined maximum safe level. Hence the pipeline valve may be operated virtually as rapidly as one may desire and, in the event that dangerous increases in upstream pressure are generated as the valve nears closed position, they are simply relieved to the downstream line through the by-pass surge relief valve. Then, as soon as such surge conditions are alleviated, the surge relief valve is closed so that only that amount of fluid which would cause the dangerous pressure condition is by-passed to the downstream side of the main valve.

## BRIEF DESCRIPTION OF THE DRAWING

The drawing is a more or less schematic plan view, partially in section, of the system of this invention.

## DESCRIPTION OF A PREFERRED EMBODIMENT

Referring now to the drawing with greater particularity, the flow interrupting system 10 of this invention is installed in a pipeline 12, which is used for the transportation of liquids, such as crude oil or liquid components refined therefrom. Installed in the pipeline is a suitable quick-closing valve 14, such as the ball valve shown. While this invention is not restricted to any particular construction, the ball valve may have a cylindrical body band 16 which is bolted at 18 to opposing end closures 20. The end closures carry cylindrical hubs 22 with flow passages 23 therethrough. Radial flanges 24 on the hubs 22 are bolted at 26 to complementary flanges 28 on the pipeline 12.

Carried in the end closures 20 are suitable seat rings 30, which are spring biased at 32 toward sealing engagement with the spherical surface 34 of the valve ball 36 through which a flow passage 38 is formed. Resilient seal rings 40 may be provided to seal against the spherical surface 34 and surrounding seal rings 42 are provided to prevent a leak path around the seat rings 30. Mounted on a trunnion 43, for turning the ball 36 is any suitable means, such as a hydraulic ram 44 engaging a scotch yoke 46, for rapid movement of the ball 36 from an open position, wherein the flow passage 38 through the valve ball 36 is aligned with flow passages 23 in the valve hubs 22, to a closed position wherein the spherical surface 34 is fully engaged by the seal ring 40 to block flow through the passages 23.

Connected to the pipeline 12 between opposite sides of the valve 14 is a smaller by-pass line 48 in which is installed a surge relief valve 50 of the expansible tube type, comprising a housing 52 with a slotted sleeve 54 that includes a central circular barrier 56 and upstream and downstream slots 58 and 60. Valves of this type are typified by that shown in U.S. Patent No. 3,272,470 granted September 13, 1966 to A. U. Bryant. A resilient sleeve 62 is stretched over the central barrier 56 to form a seal therearound and a jacket or chamber 64 is provided with a control pressure at a predetermined fixed level as by means of a gas bottle 66. The gas in the bottle 66 and chamber 64 is set at a predetermined, high but safe level for pipeline operation, so that only while such level is exceeded by pipeline

0102215

pressure and, hence, pressure in the by-pass line 48, the sleeve 62 will expand to allow limited flow to the pipeline 12 downstream of the valve 14.

In operation, the pressure in bottle 66 is set as high as possible within safe pipeline operation, and the valve operating mechanisim 44 is set to move the valve closure member 36 at a rate which, at least in the final increments of closing, will tend to generate such pressure levels. Thus, the end effect is that there will be a very rapid interruption of flow through the pipeline 12, with just enough by-pass flow through the line 48 to relieve any dangerous conditions. This may result in a small amount of excessive flow to the downstream line, but it is relatively minimal compared to the effects of slow, safe closing of the closure member 36.

One may operate the valve ball 36 as rapidly as possible, deliberately generating high pressures to open the by-pass valve 50, allowing a small amount of by-pass flow downstream in preference to greater flow through a slowly operated main valve 14.

While this invention has been described in conjunction with a preferred embodiment thereof, it is obvious that modifications and changes therein may be made by those skilled in the art to which it pertains without departing from the spirit and scope of this invention, as defined by the claims appended hereto.

**0102215**

## CLAIMS

1.   A system for quick interruption of flow in a liquid pipeline comprising:

a main valve having aligned flow passages of substantially the diameter of the pipeline, a valve closure member movable between an open position enabling flow of liquid through said flow passages and a closed position blocking flow therethrough; and

means for moving said closure member rapidly from said open position to said closed position;

a by-pass line of a diameter smaller than said pipeline diameter; and

a pressure-responsive surge relief valve in said by-pass line conditioned to open when, and as long as, by-pass line pressure exceeds a predetermined level.

2.   The system defined by claim 1 wherein said surge relief valve comprises:

an expansible tube valve including a circular barrier centered in a housing and a flexible tube stretched around said barrier with a jacket space around said tube; and

a source of gas at a fixed surge-relief pressure connected to said jacket space.

3.    A method of closing a liquid pipeline valve quickly, said pipeline valve having aligned flow passages of substantially the diameter of the pipeline and a valve closure member movable between an open position enabling flow of liquid through said flow passages and a closed position blocking flow therethrough:

said method comprising the steps of providing a by-pass line of a diameter smaller than said pipeline diameter, with a pressure-responsive surge relief valve in said by-pass line conditioned to open when, and as long as, by-pass line pressure exceeds a high but safe predetermined level; and

operating said closure member from said open position to said closed position at a rate rapidly enough to generate liquid pressures above said predetermined level.

4.    The method defined by claim 1 wherein said surge relief valve comprises:

an expansible tube valve including a circular barrier centered in a housing and a flexible tube stretched around said barrier with a jacket space around said tube; and

a source of gas at a fixed surge-relief pressure connected to said jacket space.

**European Patent Office**

## EUROPEAN SEARCH REPORT

Application number

| DOCUMENTS CONSIDERED TO BE RELEVANT | | | EP 83304682.4 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| A | DE - A1 - 3 036 821 (GROVE VALVE AND REGULATOR CO)  * Fig. 1,2 * | 1,2 | F 17 D  1/20<br>F 17 D  3/03<br>F 16 L 55/00 |
| | -- | | |
| A | GB - A - 939 550 (BRITISH PETROLEUM COMPANY LTD.)  * Totality * | 1 | |
| | -- | | |
| A | DE - A - 1 500 021 (ESCHER WYSS GMBH)  * Totality * | 1 | |
| | ---- | | |

|  |
|---|
| **TECHNICAL FIELDS SEARCHED (Int. Cl. ³)** |
| F 17 D  1/00 |
| F 17 D  3/00 |
| F 16 L 55/00 |
| F 16 K  5/00 |

The present search report has been drawn up for all claims

| Place of search | Date of completion of the search | Examiner |
|---|---|---|
| VIENNA | 17-10-1983 | SCHUGANICH |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82